# EUROPEAN PATENT APPLICATION

(11) **EP 2 902 908 A1**
(43) Date of publication of application: **05.08.2015**
(21) Application number: 12885860.2
(22) Date of filing: 28.09.2012
(51) Int. Cl.: G06F 11/34

(54) **SYSTEM OPERATION TRACE METHOD IN DISTRIBUTED SYSTEM**

(71) Applicant: Hitachi, Ltd., Tokyo 100-8280 (JP)
(72) Inventor: YAMAMOTO, Hidenori, Tokyo 100-8280 (JP); FUKUMOTO, Takashi, Tokyo 100-8280 (JP); TONOOKA, Hideki, Tokyo 100-8280 (JP)
(74) Representative: MERH-IP Matias Erny Reichl Hoffmann
(86) International application number: PCT/JP2012/075002
(87) International publication number: WO 2014/049804

(57) **Abstract**

It is difficult to assign a unified index to log data accumulated and managed at individual systems with, for example, different installation ranges and times, a compliance standard, and vendors. Accordingly, it is burdensome to trace a flow of data and operations from the accumulated log data. Furthermore, if granularity of data which are output to logs differs, there is a possibility that data which can hardly be understood or are unnecessary depending on a user might be included even if all the logs are presented to the user.
(1) A log is linked to a sequence across nodes and systems by means of a combination of partial link information. (2) Information is presented according to granularity based on the user's view, for example, on a transmitted and received data basis, application data basis, and inter-system data basis by referring to, for example, application data definition information and system configuration information.

## Description

### [Technical Field]

The present invention is targeted at a distributed system constituted by a plurality of independent nodes, which are mutually connected via a network and is mutually connected to systems of different subjects, in a field of, for example, Smart Grid or electric power. In the distributed system, the invention relates to a method for tracing a flow of data and operations across system ranges, each of which has, for example, a different format of log data generated in association with execution of processing at each node and a different method of acquiring such log data.

### [Background Art]

Various techniques to collect log information indicating an operational status of computers for the purpose of operation management (such as fault analysis or abnormal phenomena) of computer systems. For example, Patent Literature 1 suggests a log information analysis device including: a log information recording unit in which log information indicative of an operational status of a computer is recorded; a general-purpose log creation means that extracts time, at which the log information was recorded, and a specified character string from the log information recorded in the log information recording unit and creates a general-purpose log including the time converted in a specified time format and the specified character string converted in a specified format; a general-purpose log recording means that records the general-purpose log created by the general-purpose log creation means in the order of the time converted in the specified time format; a general-purpose log recording unit having the general-purpose log recorded by the general-purpose log recording means; a feature information extraction means that extracts, from the log information recording unit, feature information which includes length of log information corresponding to the general-purpose log recorded by the general-purpose log recording unit and appearance frequency of words appearing in the log information; and a display means that diagrammatizes the log information extracted by the feature information extraction means and displays it together with the log information in the order of the time converted in the specified time format.

### [Citation List]

### [Patent Literature]

[Patent Literature 1] Japanese Patent Application Laid-Open (Kokai) Publication No. 2001-356939

### [Summary of Invention]

### [Problems to be Solved by the Invention]

The present invention is a distributed system in a field of, for example, Smart Grid and is a system in which one or more systems with different installation ranges and times, and compliance standards, and vendors are mutually connected and collaborate with each other and a flow of data and operations across the systems can occur. In this case, it is difficult to assign a unified index to log data individually accumulated and managed. Therefore, it is burdensome to trace a flow of data and operations from the accumulated log data. Furthermore, if granularity of data which are output to logs varies, there is a possibility that data which can hardly be understood by a user or are unnecessary might be included even if all the logs are presented to the user.

However, the technique disclosed in Patent Literature 1 displays the log information of different types in order by using time as an index; however, in the system targeted by the present invention, time necessarily synchronizes between computers from which individual logs are output and collected. For example, even if time synchronization processing is executed, time granularity of log occurrence is finer than granularity of the time synchronization and, therefore, the time cannot be used as a unified index among the log data.

The present invention was devised in consideration of the above-described problems and it is an objective of the present invention to propose a system operation tracing method for a distributed system in which one or more systems of different installation ranges and times, compliance standards, and vendors are mutually connected and collaborate with each other and a flow of data and operations across the systems can occur, for making it easier for a user to trace the flow of data and operations within the system or between the systems and present information according to granularity based on the user's view.

### [Means for Solving the Problems]

In order to solve the above-mentioned problems, the present invention has the following configuration. Specifically speaking, a distributed system constituted by a plurality of independent nodes mutually connected via a network includes: one or more nodes that install hardware or software, whose installation range and time, compliance standard, processing content, processing target layer and the like are different, and output and accumulate log data according to a specification of the hardware or the software and a data format in association with execution of processing; one or more operational servers that collect, accumulate, and collectively manage the log data output from the node or nodes; and one or more user terminals for a user to refer to the log data and perform other operations; and wherein the system operation tracing method includes: a step of collecting and accumulating the log data, which are output at one or more nodes constituting the distributed system in association with execution of processing, in the operational server or operational servers; a step executed by the user terminal acquiring the log data from the one or more operational servers in accordance with user operation; a step whereby the user terminal establishes a link between the log data acquired from the one or more operational servers and arranges the acquired log data in order; and a step whereby the user terminal displays to the user with the linked log data arranged the acquired log data in order.

### [Advantageous Effects of Invention]

According to the present invention, it is possible to acquire and refer to only necessary log even among independent nodes. Therefore, in a field of, for example, Smart Grid or electric power, this enables easier for an operator of a complicated system, in which an installation range, installation time and a plurality of systems are mutually coupled, to recognize operations in the system when analyzing faults or preparing operation reports; and this arrangement further contributes to, for example, management and maintenance cost reduction.

### [Brief Description of Drawings]

[Fig. 1] Fig. 1 is a diagram illustrating the outline of a usage form of a system operation tracing method for a distributed system;
[Fig. 2] Fig. 2 is a diagram illustrating the outline of the distributed system; [Fig. 3] Fig. 3 is a diagram illustrating the outline of a method for linking individual log data which occur and are accumulated at each of nodes constituting the distributed system;
[Fig. 4] Fig. 4 is a diagram illustrating a module configuration of an operational server (which performs, for example, accumulation and management of log data and management of system information);
[Fig. 5] Fig. 5 is a diagram illustrating a module configuration of a user terminal (which, for example, establishes and displays links between the log data and provides user interfaces);
[Fig. 6] Fig. 6 is a diagram illustrating an example of a data format of the log data; [Fig. 7] Fig. 7 is a flowchart illustrating a flow of log data acquisition and link creation processing;
[Fig. 8] Fig. 8 is a flowchart illustrating a flow of linked log data display processing; and
[Fig. 9] Fig. 9 is a diagram illustrating a log data sequence display method. [Mode for Carrying out the Invention]

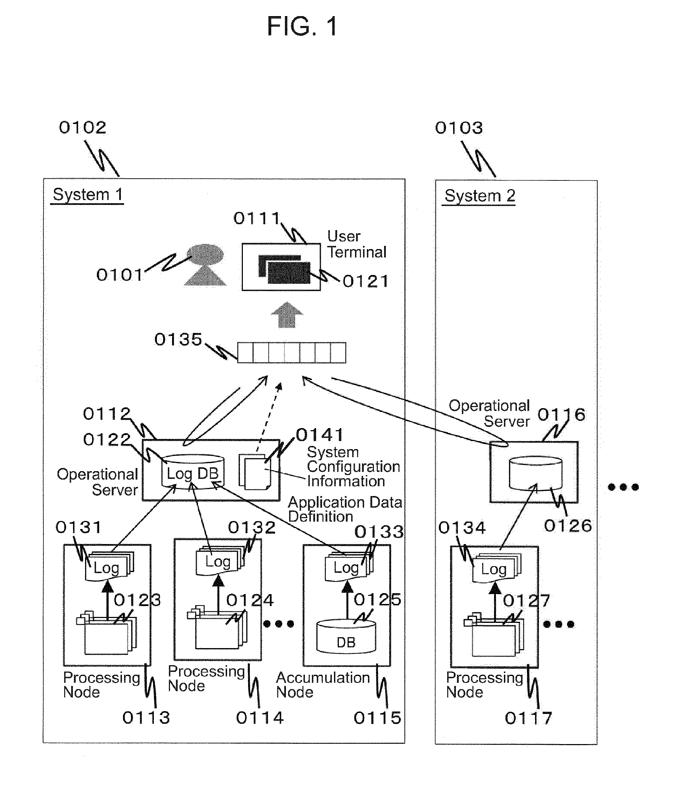

Fig. 1 is a diagram illustrating the outline of a usage form of a system operation tracing method for a distributed system according to the present invention.

With a distributed system in which two or more systems such as System 1 (0102) and System 2 (0103) operate in collaboration with each other, log data (0131, 0132) output in association with operations of programs (0123, 0124) at processing nodes (0113, 0114) of System 1 (0102), log data 0133 output in association with a DB access 0125 at an accumulation node 0115, or log data 0134 output in association with operations of a program 0127 at a processing node 0117 of System 2 (0103) are accumulated at each node (0113, 0114, 0115, 0117) immediately after being output. The log data are collected in an operational server (0112 in System 1 or 0116 in System 2) of the system, to which the relevant log data belong, at specified timing and are accumulated and managed in a log accumulation DB (0122, 0126).

When a user 0101 performs operations by using a user interface 0121 of a user terminal 0111, the user terminal 0111 acquires log data from the operational server (0112, 0126), stores the log data in a sequence array 0135 for arranging and displaying the log data in order, and displays the log data via the user interface 0121.

Incidentally, the log data which are targets of the present embodiment include, for example, processing logs of, for example, message transmission and reception and DB accesses (read and write accesses), operator operation logs which trigger the start or relay of processing, operator work records, and logs relating to processing such as master/slave switching logs, and operation mode (such as online, test, and standby modes) switching logs.

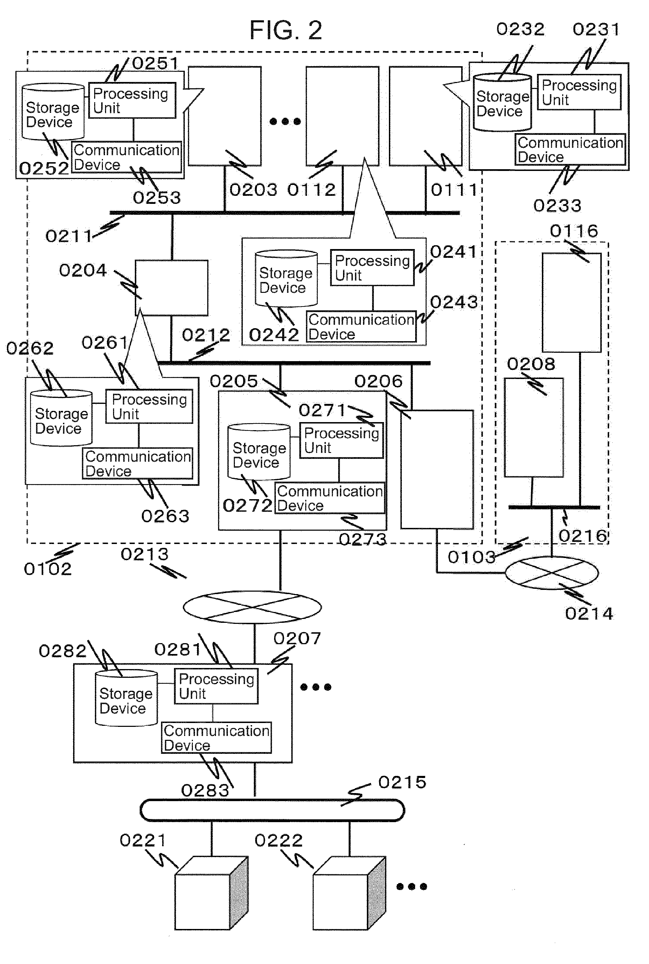

Fig. 2 is a diagram illustrating the outline of the distributed system to which the present invention is applied.

As explained with reference to Fig. 1, System 1 (0102) and System 2 (0103) collaborate with each other, thereby constituting the distributed system. Main components are: on-site equipment (such as 0221), a control controller (0207), a field network (0215), a wide area network (0213), a gateway server (0205), LAN (such as 0212), a fire wall server (0204), an application server (0203), an operational server (0112) and a user terminal (0208).
The on-site equipment is equipment located on site of a control system. The control controller is equipment for controlling the on-site equipment 0221, 0222 via the field network 0215. The gateway server mutually couples to the controller 0207 via the wide area network 0213 and is a gateway to the wide area network 0213 in System 1 (0102). The fire wall server is a server which serves as a fire wall between a LAN 0212 and a LAN 0211 in System 1 (0102). The application server is a server that, for example, connects to the LAN 0211, accumulates data, and executes business applications. The operational server is a server that, for example, accumulates the log data in System 1 (0102) and manages system configuration information. The user terminal is a terminal used by the user 0101 to, for example, refer to the log data. System 2 (0103) has the same configuration as that of System 1.

Now, the relationship between the configuration explained in Fig. 1 and the configuration explained in Fig. 2. The processing node (0113, 0114) or the accumulation node 0115 corresponds to the controller 0207, the gateway server 0205, the server 0204, or the server 0203.

Main hardware components of the user terminal 0111 are configured with a processing unit (CPU) 0231, a storage device (such as a memory or hard disk) 0232, and a communication device 0233.

Similarly, the operational server 0112, the server 0203, the gateway server 0205, and the controller 0207 include a processing unit (CPU), a storage device (such as a memory or hard disk), and a communication device.

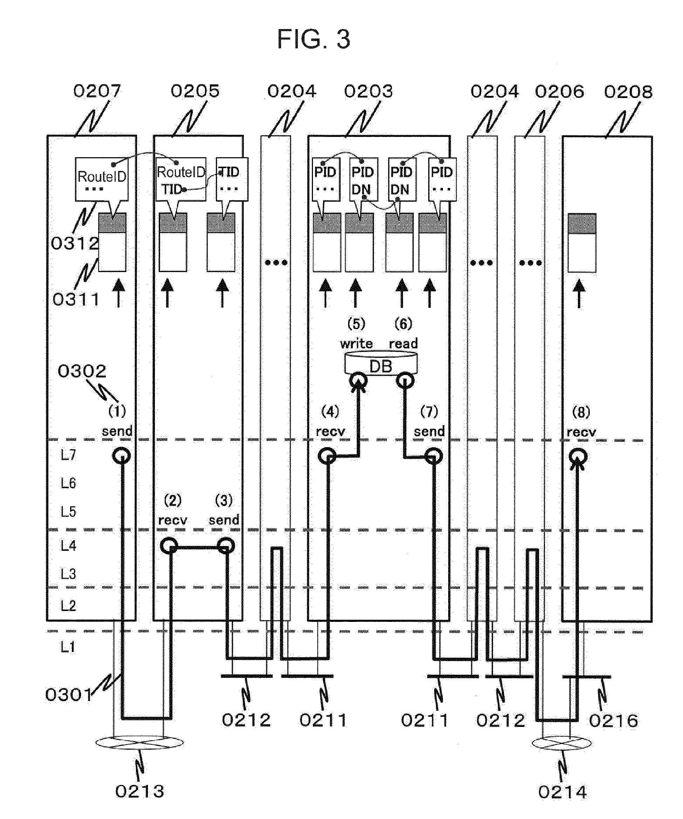

Fig. 3 is a diagram illustrating the outline of a method of establishing links between individual log data which occur and are accumulated at each of nodes which constitute the distributed system according to the present invention.

Message data sent from an application program of the controller 0207 are delivered to the server 0208 via the wide area network 0213, the gateway server 0205, the LAN 0212, the server 0204, the LAN 0211, the server 0203, the LAN 0211, the server 0204, the LAN 0212, the gateway server 0206, the wide area network 0214, and the LAN 0216. A data flow in this case is represented by a line (0301) indicated in this drawing. In association with this data flow 0301, processing 0302 ((1)-(8)) at each node is executed at each different communication layer (L1-L7) and log data 0311 are then output.

Links between the log data are established by referring to information included in the header information 0312 of the log data 0311 output in association with the data flow 0301. For example, log data of processing (1) and (2) are linked according to a "route ID (information for identifying a communication path)"; log data of processing (2) and (3) are linked according to a "TID (thread ID)"; log data of processing (4) and (5) are linked according to a "PID (process ID)"; log data of processing (5) and (6) are linked according to a "DN (data name)"; and log data of processing (6) and (7) are linked according to a "PID (process ID)." The log data associated with the data flow 0301 from the controller 0207 to the server 0208 can be extracted and arranged in order by sequentially linking the individual log data as described above. Under this circumstance, logs within the same node are linked in order based on time information, while logs between different nodes are linked with a received log within a node received a certain message next to a message transmission log within a node.

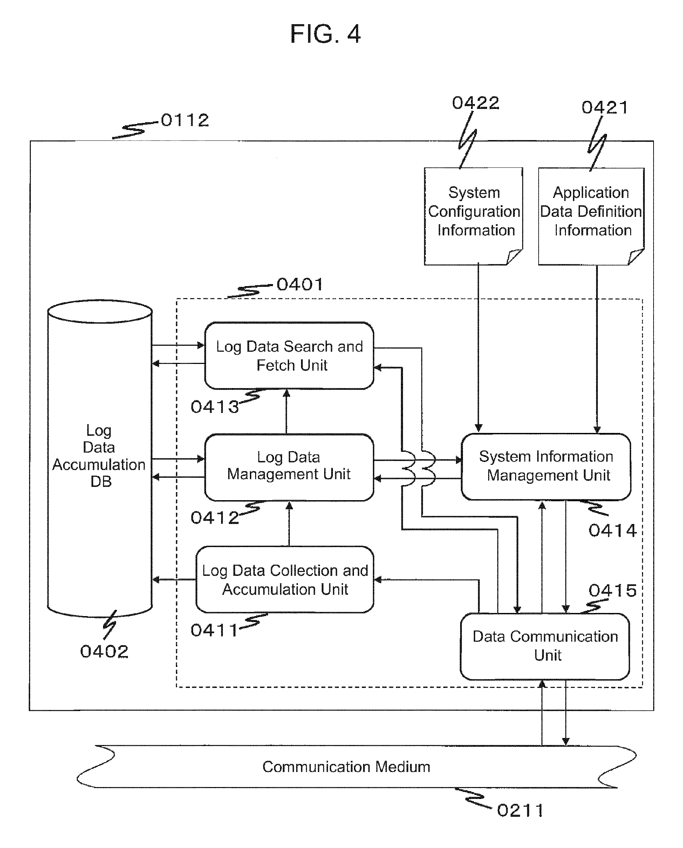

Fig. 4 is a diagram illustrating a module configuration of the operational server. The operational server performs, for example, accumulation and management of log data collected in the system and management of system information.

Middleware 0401 that collects, accumulates, and manages the log data and provides the log data to the user terminal 0111, and a log data accumulation DB 0402 for accumulating the log data are introduced to the operational server 0112.

Main components of the middleware 0401 are: a log data collection and accumulation unit 0411 that receives log data generated at each node from, for example, the processing nodes (0113, 0114, 0115) and the accumulation node 0115 within the system via the data communication unit 0415 and accumulates them in a log data accumulation DB 0402; a log data management unit 0412 that manages the log data accumulated in the log data accumulation DB 0402; a log data search and fetch unit 0413 that accepts a search request from the user terminal 0111 via the data communication unit 0415, searches the log data accumulation DB 0402 and fetches the relevant log data in response to the request; a system information management unit 0414 that manages application data definition information 0421 and system configuration information 0422 and responds to inquiries regarding the application data definition information 0421 and the system configuration information 0422 from the user terminal 0111 via the data communication unit 0415; and a data communication unit 0415 that executes communication processing with other nodes via the communication medium 0211.

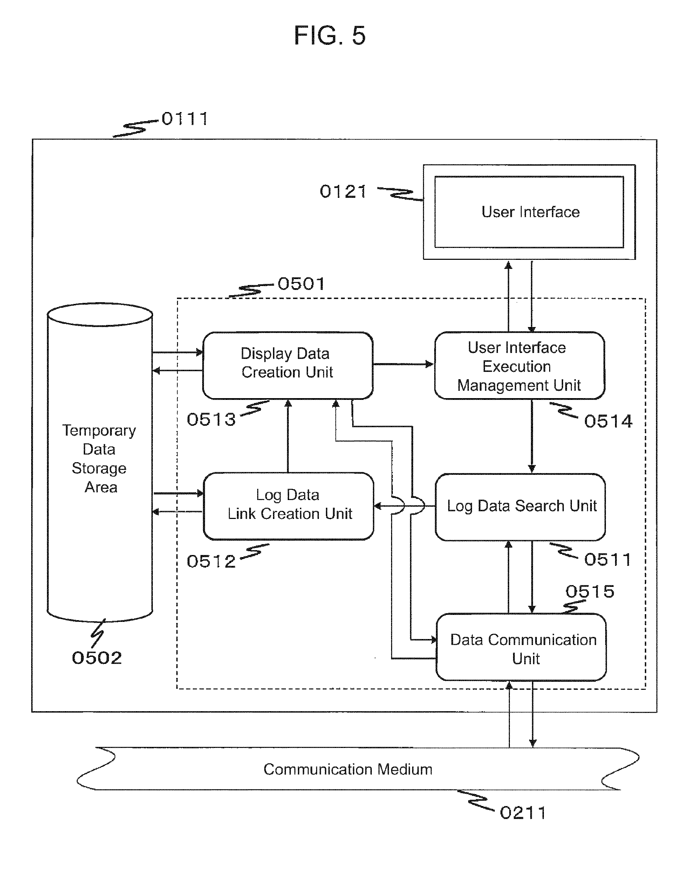

Fig. 5 is a diagram for illustrating a module configuration of the user terminal. The user terminal, for example, creates a link between the log data collected within the system, displays them, and provides a user interface.

Middleware 0501 that, for example, acquires log data, creates display data, and displays the data, a temporary data storage area 0502 for temporarily storing the log data acquired from the operational server 0112 and processed, and a user interface 0121 that provides the user with information and operations are introduced to the user terminal 0111.

Main components of the middleware 0501 are: a log data search unit 0511 that executes log data search processing on the operational server 0112 via the data communication unit 0515 based on the range and conditions designated by the user using the user interface 0121 via the user interface execution management unit 0514; a log data link creation unit 0512 that acquires log data, which are the search result, from the log data search unit 0511, extracts links between the log data, and creates sequence arrays based on the links; a display data creation unit 0513 that acquires the sequence arrays of the log data created by the log data link creation unit 0512 and creates data to be displayed by the user interface 0121 with reference to, for example, the application data definition information and the system configuration information acquired from the operational server 0112 via the data communication unit 0515; a user interface execution management unit 0514 that controls the user interface 0121 in order to, for example, display the data created by the display data creation unit 0513 and accept inputs by the user; and a data communication unit 0515 that executes communication processing with the operational server 0112 via the communication medium 0211. Incidentally, the log data link creation unit 0512 and the display data creation unit 0513 store, for example, interim data in the temporary data storage area 0502 during the process of the processing as the need arises.

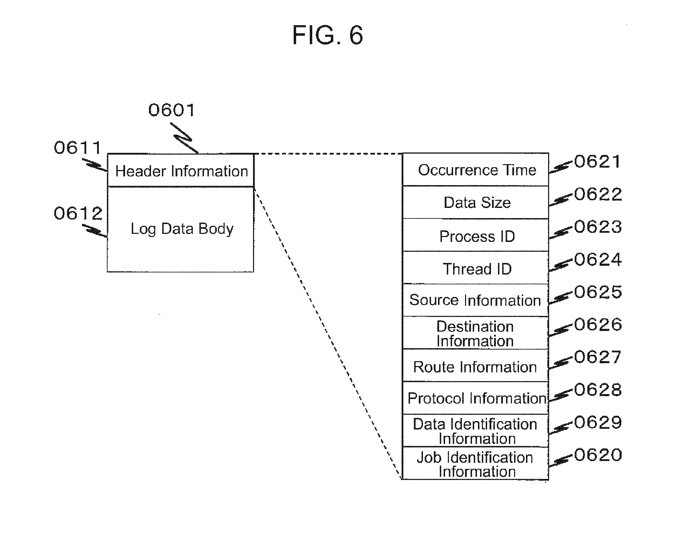

Fig. 6 is a diagram illustrating an example of a data format of log data, which is used in the distributed system according to the present invention.

Main components of the log data format 0601 are header information 0611 and a log data body 0612. The header information 0611 is information for supplementing the log data stored in the log data body 0612 and includes, as an example, occurrence time 0621, a data size 0622, a process ID 0623, a thread ID 0624, source information 0625, destination information 0626, route information 0627, protocol information 0628, data identification information 0629, and job identification information 0620. The header information 0611 does not necessarily include all these pieces of information and include information which can be output by each processing of each note that is an origin of the log data. Incidentally, information other than 0621-0620 may sometimes be included. The log data body 0612 stores the log data themselves generated by each processing at each node.

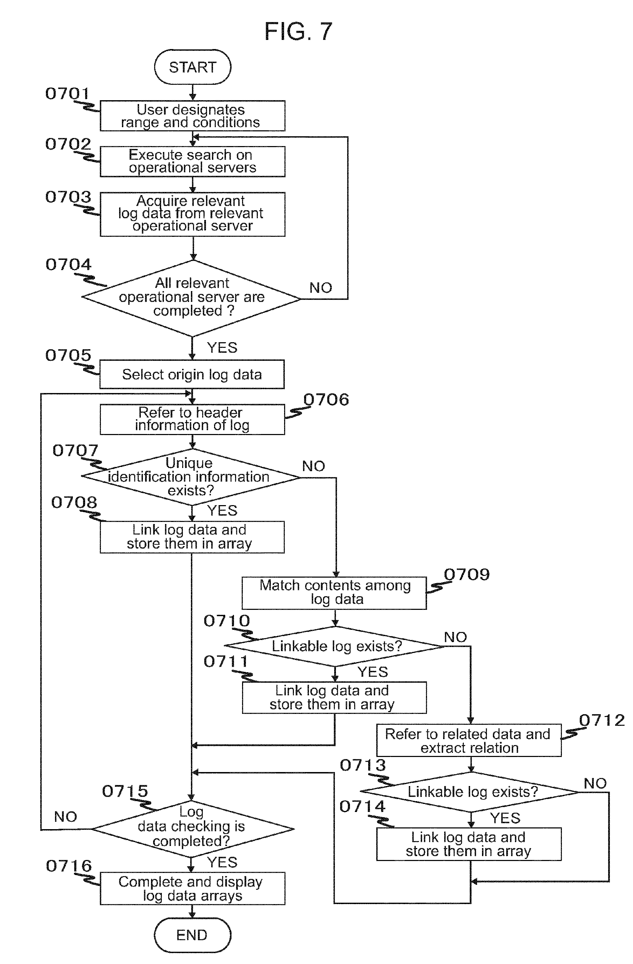

Fig. 7 is a flowchart illustrating a flow of processing for acquiring and linking the log data.

In Step 0701, the user terminal 0111 accepts designation of, for example, the range and conditions of log data, to which reference should be made, by the user 0101. For example, conditions such as the time range, the range of target computers, the type of log data, and search order are designated here. In Step 0702, the operational servers 0112 are searched for log data according to, for example, the range and conditions accepted in Step 0701. In Step 0703 as the result of Step 0702, the relevant log data are acquired from an operational server 0112 having the relevant log data. In Step 0704, if the acquisition of the log data from the operational server 0112 having all the relevant log data has not been completed, the processing from Step 0702 to Step 0703 is repeated. If the acquisition of the log data from the operational server 0112 having all the relevant log data has been completed in Step 0704, the user selects, in Step 0705, log data that satisfy conditions such as a node designated as an origin, time, and processing, from the log data acquired until Step 0704 by using the user terminal 0208. The origin is a log of a start position of, for example, processing or a job or a log of an initial position to which the user wants to refer to.
In Step 0706, reference is made to the header information of the individual log data. If unique identification information exists in Step 0707 as the result of Step 0706, linkable log data are extracted by using the unique identification information in Step 0708 and stores it in a sequence array. If the unique identification information does not exist in Step 0707 as the result of Step 0706, the content of the last log data stored in the sequence array is compared with the content of log data to be stored next in the array from among other log data, which are not stored yet, in Step 0709.

If the linkable log data exist in Step 0710 as the result of Step 0709, the relevant log data are extracted and stored in the sequence array in Step 0711. If no linkable log data exist in Step 0710 as the result of Step 0709, reference is made to related data and the relation between the last log data stored in the sequence array and the log data to be stored next in the array from among other log data which are not stored yet is extracted in Step 0712.

If the linkable log data exist in Step 0713 as the result of Step 0712, the relevant log data are extracted and stored in the sequence array in Step 0714. If no linkable log data exist in Step 0713 as the result of Step 0712, nothing is performed. If checking of all the pieces of log data acquired until Step 0704 has been completed in Step 0715, sequence arrays of the log data in Step 0716 are completed and display processing is executed on the sequence arrays of the log data. If checking of all the pieces of log data acquired until Step 0704 has not been completed in Step 0715, the processing from Step 0706 to Step 0714 is repeated.

In linking between the log data, the process ID and thread ID and the like are illustrated as identification information that should be unique. What are used when comparing one content with another among the log data are destination information, source information and a serial number included in log data for transmission processing and destination information, source information and a serial number included in log data for reception processing. Furthermore, there are a master/slave switching log and operation mode switching log as related information to which reference is made to extract the relation between the log data. For example, in a plurality of computers which constitute a multiple system and operate in parallel, only log data of the computers as masters are extracted and linked. Furthermore, processing for, for example, limiting the extraction and linking of the log data to one or more computers in the same operation mode is executed.

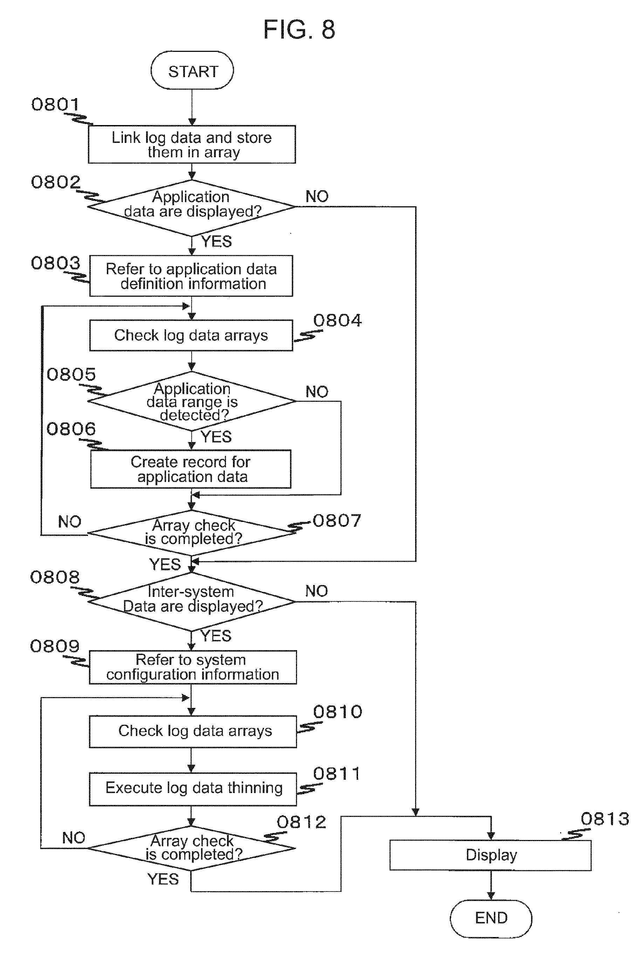

Fig. 8 is a flowchart illustrating a flow of processing executed by the user terminal for displaying the linked log data.

In Step 0801, the sequence arrays of the log data are completed in accordance with the flowchart shown in Fig. 7. When an application data display is performed as designated by the user at the user terminal 0111 in Step 0802, the application data definition information is referred to in Step 0803. In Step 0804, the application data definition information in Step 0803 is compared with the sequence arrays of the log data created in Step 0801. If the individual log data constituting the application data are extracted within the range of the application data from the sequence arrays of the log data in Step 0805 as the result of Step 0804, the log data included within the application data range in Step 0805 are unified and a record is created as the application data. If the individual log data constituting the application data are not extracted within the range of the application data from the sequence arrays of the log data in Step 0805 as the result of Step 0804, the processing from Step 0804 to Step 0806 is repeated. If the comparison of the sequence arrays of the log data has been completed in Step 0807 and inter-system data display is performed as designated by the user 0101 at the user terminal 0111 in Step 0808, the system configuration information is referred to in Step 0809. In Step 0810, the system configuration information in Step 0809 is compared with the sequence arrays of the log data created in Step 0801. In Step 0811, thinning of the log data is performed as the result of Step 0810. If comparing of the log data sequence array has not been completed in Step 0812, the processing of Step 0810 and Step 0811 is repeated. If the comparison of the log data sequence array has been completed in Step 0812, processing for displaying the data created until Step 0812 via the user interface is executed in Step 0813.

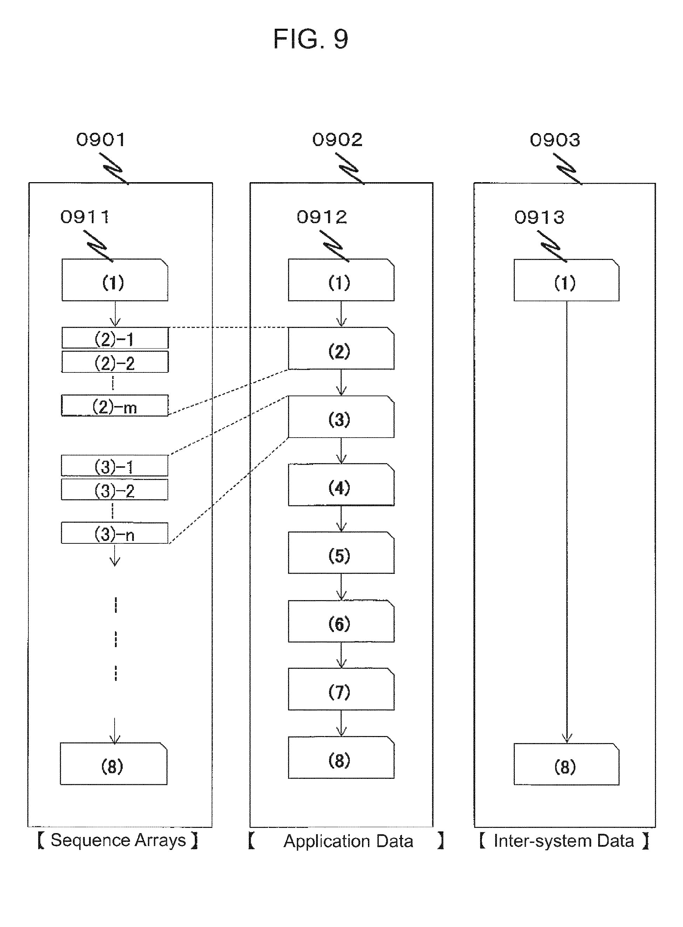

Fig. 9 is a diagram illustrating a method for displaying log data sequences by the user terminal.

0901 shows sequence arrays of the log data created by the processing in Fig. 7; 0902 shows individual log data included in 0901 by arranging them according to granularity of the application data; and 0903 shows log data as seen as interchanges between the systems. Signs (1) to (8) in Fig. 1 correspond to signs (1) to (8) in Fig. 3.

When creating the application data display 0902, a format, size and identification information and the like of the application data are referred to as application data definition information, and thereby a plurality of log data corresponding to the application data from the log data 0911 included in the sequence arrays 0901 are extracted, unified and rearranged (0912). In this example, log data (2) in 0912 are created from log data (2)-1 to (2)-m in 0911 and log data (3) in 0912 are created from log data (3)-1 to (3)-n in 0911.

When creating the inter-system data display 0903, information such as node roles (such as an application processing node and gateway, etc.) and communication paths are referred to as system configuration information, and thereby the log data 0913 according to granularity of the system is created by performing thinning of the log data 0911 included in the sequence arrays 0901. For instance, at this stage only log data regarding an originator and final destination of the data are displayed.

### [Reference Signs List]

0102: System 1; 0103: System 2; 0112: operational server; 0113: processing node; 0203: application server; 0207: controller; 0208: user terminal; 0215: field network; and 0221: on-site equipment.

## Claims

1. A log management method for commonly managing a log data generated in a plurality of systems, the method comprising:
a log output step whereby a processing node coupled to the system outputs a log by writing information regarding processing at the processing node to header information;
a log acquisition step of acquiring the log from the processing node;
a reference step of referring to information concerning the processing from the header information of a plurality of the logs acquired thereof; and
an order determination step of determining order of the plurality of logs in accordance with the information referred thereof regarding the processing.

2. The log management method according to claim 1,
wherein the information concerning the processing is information that uniquely identifies processing, and information that defines order of the processing;
wherein the order determination step determines the order of the plurality of logs based on the information in which the order of the processing is defined.

3. The log management method according to claim 2,
wherein the order determination step determines, if the information concerning the processing includes information capable of uniquely identifying a log, the order of logs based on the information; and if the information concerning the processing does not include the information capable of uniquely identifying a log, the order of logs by comparing the content of the plurality of logs.

4. A system operation tracing method for a distributed system constituted by a plurality of independent nodes mutually coupled via a network,
the distributed system including: one or more nodes, in which hardware or software whose installation range and time, a compliance standard, processing content, processing target layer and the like are different from each other is installed, and log data is output and accumulated in accordance with a specification of the hardware or software and a data format in association with execution of processing; one or more operational servers that collect, accumulate and collectively manages the log data output from the node(s); and one or more user terminals for a user to refer to the log data and perform another operation;
wherein the system operation tracing method comprising:
a step of collecting and accumulating the log data, that are output at one or more nodes constituting the distributed system in association with the execution of processing, in the operational server(s);
a step whereby the user terminal acquires the log data from the one or more operational servers in accordance with the user's operation;
a step whereby the user terminal establishes a link between the log data regarding log data acquired from the one or more operational servers and arranges the acquired log data in order; and
a step whereby the user terminal displays to the user with log data arranged in the linking and order.

5. The system operation tracing method according to claim 4,
wherein the log data, which are output from the one or more nodes constituting a distributed system in association with execution of processing, are configured with a log data body including information related to the relevant processing and header information including various information to supplement and explain the log data body.

6. The system operation tracing method according to claim 4,
wherein the log data, which are output from the one or more nodes constituting a distributed system in association with execution of processing, are accumulated at the node or nodes immediately right after being output; and the log data accumulated at the node or nodes are collectively transmitted to an operational server at certain timing and accumulated and managed at the operational server.

7. The system operation tracing method according to claim 4,
wherein when the user terminal acquires the log data from the one or more operational servers, conditions such as the operational server as an acquisition destination and a time range and type of the log data, in accordance with the designation made by the user.

8. The system operation tracing method according to claim 4,
wherein if identification information being unique among the log data is extracted from, for example, the head information of the log data when the user terminal establishes a link between the log data regarding log data acquired from the one or more operational servers and arranges the acquired log data in order, the link is established between the log data by using the unique identification information.

9. The system operation tracing method according to any one of claims 4 to 8,
wherein if the user terminal can confirm that the log data are related to the same event each other by comparing the contents of, for example, the header information of the log data when establishing a link between the log data regarding log data acquired from the one or more operational servers and arranging in order, a link between the log data is established.

10. The system operation tracing method according to any one of claims 4 to 9,
wherein when the user terminal establishes a link between the log data regarding log data acquired from the one or more operational servers and arranges the acquired log data in order, a link is established between the log data by referring to related data and extracting and discovering a relation between the log data.

11. The system operation tracing method according to claim 4,
wherein when the user terminal displays the log data arranged in linking and order, the user terminal refers to application data definition information, integrates one or more log data corresponding to one application data among the log data arranged in linking order as one record, and performs kinking and arranging the one or more log data in linking and order again.

12. The system operation tracing method according to claims 4 to 11,
wherein when the user terminal displays to an user with the log data arranged in linking and order, the user terminal refers to system configuration information and performs thinning log data arranged in the linking and order among log data arranged in the linking order so that the log data with granularity designated by the user are displayed.
